# EUROPEAN PATENT APPLICATION

(11) **EP 3 667 147 A1**
(43) Date of publication of application: **17.06.2020**
(21) Application number: 19177504.8
(22) Date of filing: 30.05.2019
(51) Int. Cl.: F16L 37/088

(54) **QUICK CONNECTOR ASSEMBLY FOR CONNECTING HOSE**

(30) Priority: 12.12.2018 KR 20180159613
(71) Applicant: Yushin Precision Industrial Co., Ltd., Incheon 21999 (KR)
(72) Inventor: KIM, Jae Hi, 21976 Incheon (KR); YUN, Young Sang, 21407 Incheon (KR); CHO, Si Hyun, 21325 Incheon (KR); PARK, Jin Sung, Gyeonggi-do 14540 (KR)
(74) Representative: Cabinet Chaillot

(57) **Abstract**

The present invention relates to a quick connector assembly 100 for connecting a hose. The quick connector assembly is configured such that a female connector 110 has a slide opening 116 communicating in a vertical direction with a passage 111 into which a male connector 140 is inserted, a check member 130 is inserted into the slide opening 116 while sliding along the slide opening 116 in the vertical direction and is constrained to remain inserted in the female connector 110, the male connector 140 has a protrusion 141 acting on the check member 130 when the male connector 140 is inserted into the female connector 110. When the male connector 140 is inserted into the female connector 110, the check member 130 is pressurized to slide in the vertical direction by the protrusion 141 and protrudes to an outer surface of the female connector 110, and when the male connector 140 is locked by the locking clip 120, the check member 130 is locked in a protruding state.

## Description

### CROSS REFERENCE TO RELATED APPLICATION

The present application claims priority to Korean Patent Application No. 10-2018-0159613, filed December 12, 2018, the entire contents of which is incorporated herein for all purposes by this reference.

### BACKGROUND OF THE INVENTION

### Field of the Invention

The present invention relates generally to a quick connector assembly for connecting a hose and, more particularly, to a quick connector assembly for connecting a hose which is used to connect a fluid conveyance hose, for example, a fuel hose for a vehicle.

### Description of the Related Art

Generally, a band clamp made of a steel material is used to connect a hose to a structure such as an engine or a radiator, or to another hose, but a quick connector assembly is applied in a situation when quick connection is required, or especially in a small space such as an engine room of a vehicle.

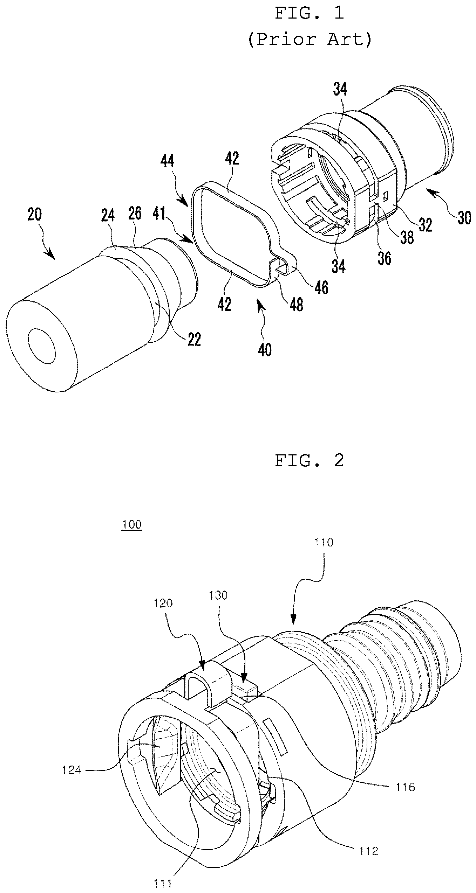

The invention proposed by the applicant as the quick connector assembly includes: a male connector 20 connected to an end part of a hose side; a female connector 30 connected to an inlet of a structure side; and a locking clip 40 as shown in FIG. 1. The quick connector assembly is configured such that when the male connector 20 is inserted into the female connector 30, and a locking groove 22 of the male connector 20 is locked by the locking clip 40 that is fitted through a slit 34 provided along a rim of the female connector 30.

However, according to the technical configuration of the quick connector assembly, it is difficult for a worker to check whether or not the locking by the locking clip 40 is properly performed when the male connector 20 is inserted into the female connector 30, that is, there is no means for allowing a worker to quickly and accurately check whether or not connection between the male and female connectors 20 and 30 is properly performed. Thus, it is required to provide a means for allowing a worker to quickly and accurately check whether or not the connection between the male and female connectors 20 and 30 is properly performed.

### SUMMARY OF THE INVENTION

Accordingly, the present invention has been made keeping in mind the above problems occurring in the related art, and the present invention is intended to propose a quick connector assembly for connecting a hose, which is capable of allowing a worker to quickly and accurately check whether or not the connection between male and female connectors is properly performed.

In order to achieve the above object, according to one aspect of the present invention, there is provided a quick connector assembly for connecting a hose includes: a female connector; a male connector inserted into the female connector; and a locking clip coupled to the male connector inserted in the female connector to lock the male connector. The female connector may have a slide opening communicating in a vertical direction with a passage of the female connector into which the male connector is inserted. A check member may be inserted into the slide opening and be configured to slide along the slide opening in the vertical direction and to be constrained to remain inserted in the female connector. The male connector may have a protrusion acting on the check member when inserted into the female connector, so when the male connector is inserted into the female connector, the check member may be pressurized to slide in the vertical direction by the protrusion and protrude from an outer surface of the female connector, and when the male connector is locked by the locking clip, the check member may be locked in a protruding state.

The female connector may have a spring support surface adjacent to the slide opening, and the check member may have a spring bar protruding from a side surface thereof, so when the check member slides in the vertical direction, the spring bar may be elastically deformed while contacting with the spring support surface and being pressurized in a direction of the passage.

The female connector may have a slit along a rim thereof. The locking clip may be an elastic band that is partially fitted in the slit while surrounding an outer circumferential surface of the female connector, and protrude into the passage, thereby being coupled to the male connector that is inserted in the female connector. The elastic band may have an opening and closing handle that provides a space between the elastic band and the outer circumferential surface of the female connector. The slide opening and the check member may be configured to partially extend toward the slit such that a part of the check member may be disposed at the space of the locking clip, so that unlocking operation of the opening and closing handle which may be started only when the opening and closing handle is pressurized in a circumferential direction is disturbed.

The female connector may have an inclined opening adjacent to the slide opening in an opposite direction of the slit, and the check member locked in the protruding state by the protrusion may be capable of being turned to the inclined opening in accordance with operation of a worker. When the check member is turned to the inclined opening, a part of the check member may be separated from the space, thereby enabling the unlocking operation of the opening and closing handle.

When the elastic band is fitted in the slit and a part of the elastic band protrudes into the passage, an end part of the protruding part of the elastic band that protrudes toward the male connector inserted into the passage is formed as an extended surface that is opened outwardly, a front end part of the male connector that is inserted into the passage may contact with and pressurize the extended surface of the protruding part to open the extended surface outwardly, so that the male connector may pass through a section defined by the part of the elastic band protruding into the passage.

The slide opening and the check member may each have a partially 'T' -shaped cross section including an upper end part thereof that is in contact with the outer circumferential surface of the female connector. The upper end part of the 'T'-shaped check member may include a cross bar extended in a transverse direction of the female connector and an extension bar extended in an axial direction of the female connector from a center of the cross bar. A part of the check member disposed in the space may be an end part extended from the extension bar.

The check member may have an inclined surface at an end part thereof toward the passage in the vertical direction, and the protrusion may act on the check member through contact pressurization with respect to the inclined surface of the check member.

As described above, according to the quick connector assembly for connecting the hose of the present invention, since the check member protrudes from the outer surface of the female connector when the male connector is properly inserted into the female connector and the locking is completed, a worker can easily detect the protruding check member with sight and/or touch, and thus can quickly and accurately check whether or not the connection between the male and female connectors is properly performed.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is an exploded-perspective view showing a quick connector assembly for connecting a hose according to the related art.
FIG. 2 is a perspective view showing a coupled state of a female connector, a locking clip, and a check member that are components of a quick connector assembly for connecting a hose according to an exemplary embodiment of the present invention.
FIG. 3 is an exploded-perspective view showing the female connector, the locking clip, and the check member of FIG. 2.
FIG. 4 is a cross-sectional view of FIG. 2.
FIGS. 5A and 5B are a bottom perspective view and a top perspective view showing the separated check member of FIG. 2.
FIGS. 6A to 6D are cross-sectional views showing a connection process between male and female connectors by the quick connector assembly of FIG. 2.
FIGS. 7A and 7B are a front view and a side view showing action of the check member in a connected state of FIG. 6D.
FIGS. 8A and 8B are a front view and a side view showing a process of unlocking the locking clip in the connected state of FIG. 6D.

### DETAILED DESCRIPTION OF THE INVENTION

Hereinbelow, an exemplary embodiment of the present inv ention will be described in detail with reference to the acco mpanying drawings. Throughout the drawings, the same refere nce numerals will refer to the same or like parts.

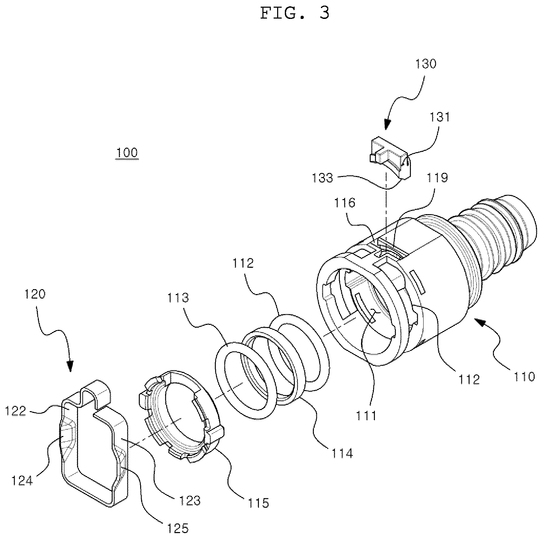

According to an embodiment of the present invention, a quick connector assembly 100 for connecting a hose includes a female connector 110 having a passage 111 in a transverse direction and a locking clip 120 removably fitted into a slit 112 that is provided along a rim of the female connector 110 adjacent to an inlet of the passage 111 of the female connector 110, as shown in FIGS. 2 and 3.

O-rings 112 and 113, a spacer 114, and a washer 115 that locks the O-rings 112 and 113 and the spacer 114are inserted into the passage 111 of the female connector 110.

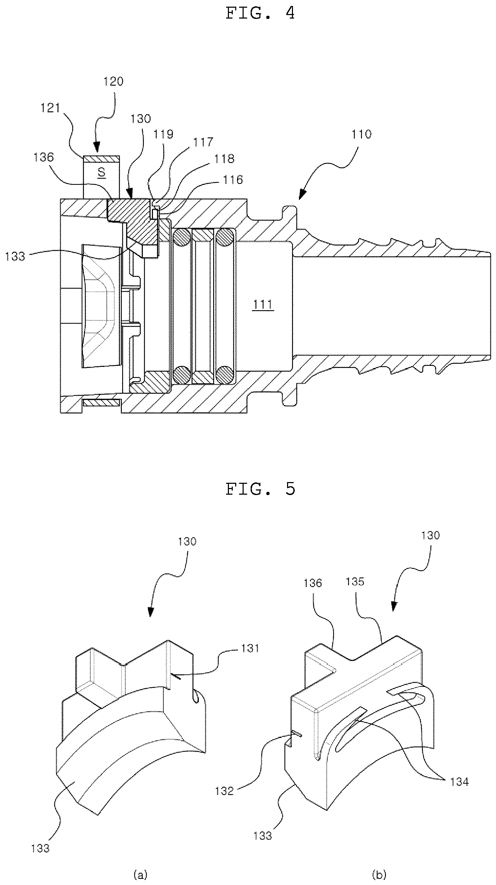

The female connector 110 has a slide opening 116 (referring to FIG. 4) communicating in a vertical direction with the passage 111, and the slide opening 116 is in contact with the outside in an upward direction through an outer circumferential surface of the female connector 110.

The slide opening 116 is provided so that the check member 130 is inserted therein and is slidable along the slide opening 116 that is extended in a vertical direction. The check member 130 is prevented from separation to the outside by a locking step 117 which protrudes from a side of an outer end, that is, a side of an upper end of the slide opening 116. The check member 130 is provided with locking protrusions 131 and 132 (referring to FIG. 5) protruding from both left and right sides of the check member, and corresponding to this, the slide opening 116 has support protrusions (not shown) at walls thereof so that the check member 130 does not fall into the passage 111.

The check member 130 has an inclined surface 133 at a lower end of a first side surface toward an inlet of the passage 111 as shown in FIG. 5, and a pair of spring bars 134 protruding upwardly from the center of a second side surface opposite to the first side surface. When the check member 130 slides upwardly, the spring bars 134 are in contact with a spring support surface 118 that is a lower end of the locking step 117 (referring to FIG. 4) and are elastically deformed to be pressurized in a direction of the passage 111.

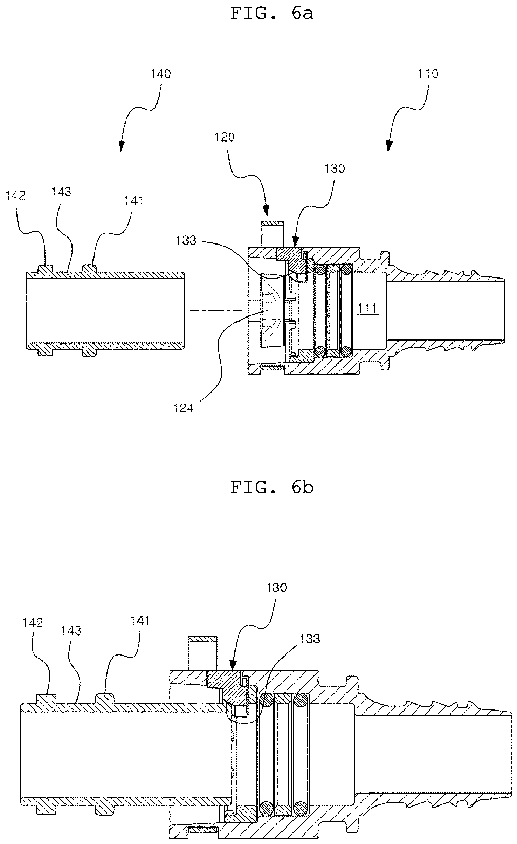

According to the embodiment of the present invention, the quick connector assembly 100 for connecting the hose includes a male connector 140 which has a protrusion 141 at an outer circumferential surface corresponding to the inclined surface 133 of the check member 130 as shown in FIG. 6A.

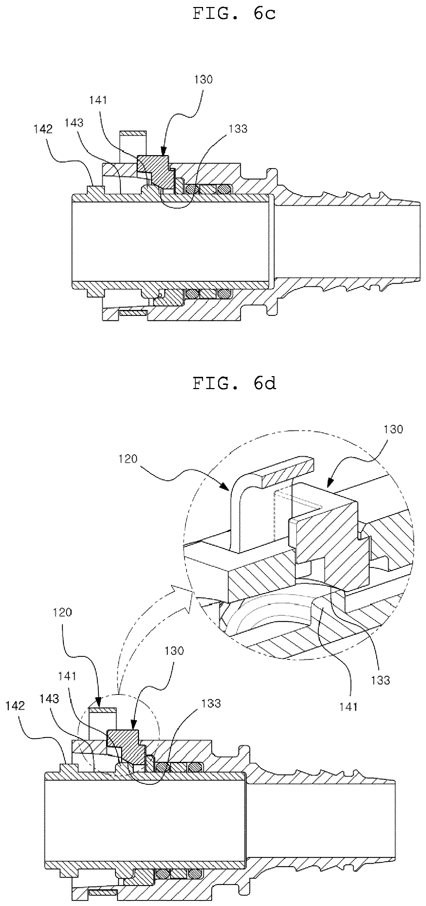

The male connector 140 is inserted into the passage 111 of the female connector 110. In this process, the inclined surface 133 of the check member 130 protrudes slightly by contacting with the outer circumferential surface of the male connector 140 as shown in FIG. 6B, and when the protrusion 141 begins to contact with the inclined surface 133 as shown in FIG. 6C, the check member 130 protrudes further to the outside of the female connector 110, and when the insertion of the male connector 140 into the female connector 110 is completed as shown in FIG. 6D, the male connector 140 is locked in the inserted state by the locking clip 120, so the check member 130 is locked in a maximum protruding state.

The locking of the male connector 140 is performed as follows, a part of the locking clip 120 surrounding the outer circumferential surface of the female connector 110 is fitted into the slit 112 and protrudes into the inner passage 111 as shown in FIG. 2, and when the insertion of the male connector 140 is completed as shown in FIG. 6D, the protruding part of the locking clip 120 is inserted into a locking groove 143 provided between the protrusion 141 and a rear stopping step 142.

A worker can easily check whether or not the connection between male and female connectors 140 and 110 is normally completed through the check member 130 protruding from the outer surface of the female connector 110 according to the process described above.

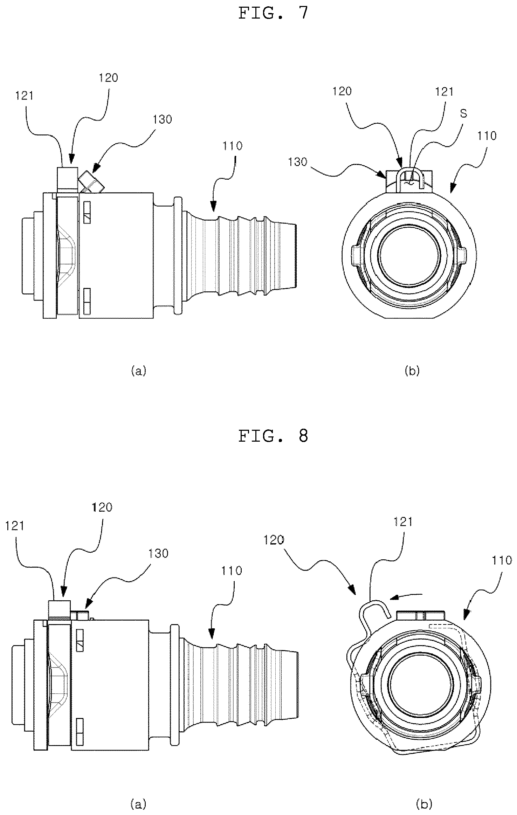

The locking clip 120 fastened to the locking groove 143 as shown in FIG. 6D is unlocked by a way of turning an opening and closing handle 121 counterclockwise as shown in FIGS. 8A and 8B. Typically, the locking clip 120 is an elastic band made of steel or plastic materials and is unlocked in a counterclockwise direction as shown in FIGS. 8A and 8B. On the contrary, it is locked while being wound clockwise on the outer circumferential surface of the female connector 110.

Here, the opening and closing handle 121 provides a space S (referring to FIG. 7B) between the opening and closing handle 121 and the outer circumferential surface of the fastened female connector 110. In the space S, a protruding part of the check member 130 is disposed (referring to FIG. 6D). Accordingly, even when the opening and closing handle 121 is pressurized counterclockwise due to an external force, unlocking operation of the opening and closing handle 121 may be disturbed by the check member 130 partially protruding into the space S.

However, when the worker forcibly unlocks the opening and closing handle 121, the check member 130 that partially protrudes into the space S may interfere with the unlocking operation. Accordingly, as shown in FIGS. 3 and 4, the female connector 110 has an inclined opening 119 adjacent to the slide opening 116, so the check member 130 protruding as shown in FIG. 8A may be turned to the inclined opening 119 according to operation of the worker (referring to FIG. 7A).

Therefore, in order to unlock the connection between the male and female connectors 140 and 110, the worker may first turn the check member 130 as described above to allow the part of the check member 130 to be moved away from the space S. Accordingly, the unlock operation of the opening and closing handle 121 may not be disturbed.

Referring to FIG. 5, the check member 130 according to the embodiment has a 'T' -shaped cross section from an upper end part to a center part. Correspondingly, a corresponding part of the slide opening 116 has also a 'T'-shaped cross section as shown in FIGS. 3 and 4. The upper end part of the 'T'-shaped check member 130 includes a cross bar 135 extended in the transverse direction and an extension bar 136 extended from the center of the cross bar 135 to the front. An extended end part of the extension bar 136 is disposed in a lower part of the space S of the opening and closing handle 121 as shown in FIG. 4.

Meanwhile, in the related art as shown in FIG. 1, a male connector 20 has an inclined surface 26 at a front end part and is inserted into a female connector 30 by opening a locking clip 40 using the inclined surface 26. However, in the embodiment of the present invention, a right front end part of the male connector 140 is formed in a usual cylindrical shape as shown in FIG. 6A, so the locking clip 120 cannot be opened by only this. Therefore, as shown in FIGS. 2 and 3, the locking clip 120 according to the embodiment is provided such that left and right end parts toward the male connector 140 of middle parts of left and right surfaces 122 and 123 that are inserted into the slit 112 and protrude into the passage 111 of the female connector 110 are formed as extended surfaces 124 and 125 opened outwardly.

Accordingly, the front end part of the male connector 140 that is inserted into the passage 111 as shown in FIG. 6A may contact with and pressurize the extended surfaces 124 and 125 to open them outwardly, so that the male connector 140 can pass through a section that is formed by a part of the locking clip 120 protruding into the passage 111.

The quick connector assembly 100 for connecting the hose is merely an embodiment for understanding of the present invention, those skilled in the art will appreciate that various modifications, additions and substitutions are possible, without departing from the scope and spirit of the invention as disclosed in the accompanying claims.

## Claims

1. A quick connector assembly for connecting a hose, the quick connector assembly comprising: a female connector, a male connector inserted into the female connector, and a locking clip coupled to the male connector inserted in the female connector to lock the male connector,
wherein the female connector has a slide opening communicating in a vertical direction with a passage of the female connector into which the male connector is inserted,
a check member is inserted into the slide opening, the check member is configured to slide along the slide opening in the vertical direction and to be constrained to remain inserted in the female connector,
the male connector has a protrusion acting on the check member when inserted into the female connector, and
when the male connector is inserted into the female connector, the check member is pressurized to slide in the vertical direction by the protrusion and protrudes from an outer surface of the female connector, and when the male connector is locked by the locking clip, the check member is locked in a protruding state.

2. The quick connector assembly for connecting the hose of claim 1, wherein the female connector has a spring support surface adjacent to the slide opening, and the check member has a spring bar protruding from a side surface thereof, so when the check member slides in the vertical direction, the spring bar is elastically deformed while contacting with the spring support surface and being pressurized in a direction of the passage.

3. The quick connector assembly for connecting the hose of claim 1, wherein the female connector has a slit along a rim thereof, the locking clip is an elastic band that is partially fitted in the slit while surrounding an outer circumferential surface of the female connector, and protrudes into the passage, thereby being coupled to the male connector that is inserted in the female connector, the elastic band has an opening and closing handle that provides a space between the elastic band and the outer circumferential surface of the female connector, and the slide opening and the check member are configured to partially extend toward the slit such that a part of the check member is disposed at the space of the locking clip, so that unlocking operation of the opening and closing handle which is started only when the opening and closing handle is pressurized in a circumferential direction is disturbed.

4. The quick connector assembly for connecting the hose of claim 3, wherein the female connector has an inclined opening adjacent to the slide opening in an opposite direction of the slit, and the check member locked in the protruding state by the protrusion is capable of being turned to the inclined opening in accordance with operation of a worker, and when the check member is turned to the inclined opening, a part of the check member is separated from the space, thereby enabling the unlocking operation of the opening and closing handle.

5. The quick connector assembly for connecting the hose of claim 3, wherein when the elastic band is fitted in the slit and a part of the elastic band protrudes into the passage, an end part of the protruding part of the elastic band that protrudes toward the male connector inserted into the passage is formed as an extended surface that is opened outwardly, a front end part of the male connector that is inserted into the passage contacts with and pressurizes the extended surface of the protruding part to open the extended surface outwardly, so that the male connector is capable of passing through a section defined by the part of the elastic band protruding into the passage.

6. The quick connector assembly for connecting the hose of claim 3, wherein the slide opening and the check member each have a partially 'T'-shaped cross section including an upper end part thereof that is in contact with the outer circumferential surface of the female connector, the upper end part of the 'T' -shaped check member includes a cross bar extended in a transverse direction of the female connector and an extension bar extended in an axial direction of the female connector from a center of the cross bar, and a part of the check member disposed in the space is an end part extended from the extension bar.

7. The quick connector assembly for connecting the hose of claim 1, wherein the check member has an inclined surface at an end part thereof toward the passage in the vertical direction, and the protrusion acts on the check member through contact pressurization with respect to the inclined surface of the check member.
